# EUROPÄISCHE PATENTSCHRIFT

(11) **EP 3 726 313 B1**
(45) Veröffentlichungstag und Bekanntmachung des Hinweises auf die Patenterteilung: **18.08.2021**
(21) Anmeldenummer: 20165747.5
(22) Anmeldetag: 26.03.2020
(51) Int. Cl.: G05B 19/10, G05B 9/02

(54) **SICHERHEITSSCHALTVORRICHTUNG**
SAFETY SWITCHING DEVICE
COMMUTATEUR DE SÉCURITÉ

(30) Priorität: 16.04.2019 DE 102019110065
(43) Veröffentlichungstag der Anmeldung: 21.10.2020
(73) Patentinhaber: SICK AG, 79183 Waldkirch (DE)
(72) Erfinder: Weidenmüller, Jonas, 79115 Freiburg (DE)

(56) Entgegenhaltungen:
- EP-A1- 1 847 891
- DE-A1-102014 110 018
- US-A1- 2018 024 522

## Beschreibung

Die Erfindung betrifft eine Sicherheitsschaltvorrichtung, insbesondere ein Sicherheitsrelais, mit einer Vielzahl von Schalterelementen zum sicheren Einstellen mindestens eines Betriebsparameters nach dem Oberbegriff von Anspruch 1.

Eine gattungsgemäße Sicherheitsschaltvorrichtung ist eine einfache Form einer Sicherheitssteuerung, deren Funktion es ist, bei Anliegen eines Gefahrensignals fehlerfrei auf eine vorgegebene Art zu reagieren. Eine typische Anwendung der Sicherheitstechnik ist die Absicherung gefährlicher Maschinen, wie etwa Pressen oder Roboter, die sofort abgeschaltet oder abgesichert werden müssen, wenn sich Bedienpersonal in unerlaubter Weise nähert. Dazu ist ein Sensor vorgesehen, der die Annäherung erkennt, wie etwa ein Lichtgitter oder eine Sicherheitskamera. Erkennt ein solcher Sensor eine Gefährdung, so muss eine mit dem Sensor verbundene Sicherheitssteuerung absolut zuverlässig ein Abschaltsignal generieren.

Eine derart im Personenschutz eingesetzte Sicherheitsschaltvorrichtung muss hohe Anforderungen an ihre Zuverlässigkeit und Fehlersicherheit erfüllen. Das ist in einschlägigen Sicherheitsnormen festgehalten und bedeutet beispielsweise, dass Auswertungen und Anschlüsse redundant oder diversitär-redundant vorhanden sind, um einen mehrkanaligen Aufbau zu realisieren, und/oder Selbsttests in kurzen Zyklen vorgesehen sind, um Fehler aufzudecken.

Sicherheitsrelais sind Beispiele für einfache Sicherheitssteuerungen mit geringem Funktionsumfang oder nicht änderbarer Funktion. Um ein günstiges Gerät anbieten zu können, besitzen solche Sicherheitsrelais keine Schnittstelle, um sie mit einem Rechner zu verbinden und von dort aus zu konfigurieren. Zumindest einige Konfigurationsmöglichkeiten in gewissem Rahmen möchte der Anwender aber noch haben, da sonst zu viele Varianten angeboten und eingesetzt werden müssten. Ein Beispiel ist ein Sicherheitsrelais mit verzögert öffnenden Kontakten, wo wünschenswert ist, wenn sich die Verzögerungszeit einstellen lässt.

Die Konfiguration hat Einfluss auf das Verhalten des Geräts im Gefährdungsfall, wenn also das Sicherheitsschaltgerät seine geforderte Sicherheits- oder Schaltfunktion verlässlich leisten soll. Deshalb muss das Risiko einer gefährlichen Veränderung der Konfiguration durch einen zufälligen Fehler entsprechend gering sein. Auch Manipulationen sollten zumindest erschwert und ein versehentliches Umkonfigurieren verhindert werden. Sicherheit ist zwar unabdingbar, aber nicht der einzige zu beachtende Aspekt. Die Sicherungsmaßnahmen dürfen keine zu großen Auswirkungen auf die Alltagstauglichkeit haben. Der Anwender sollte ohne vertieftes Expertenwissen und allzu große Mühen in der Lage sein, eine Konfiguration vorzunehmen. Besonders relevant ist dies bei einem Defekt. Dann wird eine einfache Konfigurationsmöglichkeit direkt am Gerät gewünscht, die unkompliziert abgelesen und auf ein Austauschgerät übertragen werden kann.

Im Stand der Technik ist dafür als Eingabemöglichkeit ein Drehschalter bekannt. Um damit eine ausreichend hoher Fehlersicherheit zu erzielen, sind die Drehschalter redundant vorhanden oder werden diversitär-redundant eingelesen. Drehschalter verursachen wegen ihrer zusätzlichen Drehachse Mehraufwand bei der Herstellung. Außerdem ist die Anzahl der Eingabemöglichkeiten begrenzt, die sich übersichtlich und unterscheidbar auf einer Umdrehung anordnen lassen. Für eine größere Anzahl von Eingabemöglichkeiten sind dann sogar mehrere Drehschalter erforderlich.

Als Schutz gegen Manipulation und versehentliche Änderung der Konfiguration werden herkömmlich mechanische Abdeckungen verwendet. Das verursacht wiederum Mehraufwand und erschwert das Ablesen der gegenwärtigen Konfiguration, gerade bei schwer zugänglich montiertem Gerät. Bekannt ist weiterhin ein unabhängiger Bestätigungstaster, der beispielsweise während einer Konfigurationsroutine betätigt werden muss.

Die EP 1 847 891 A1 offenbart ein Verfahren zur sicheren Parametrierung einer Sicherheitsschaltvorrichtung. Dabei ist eine Reihe von DIP-Schaltern vorgesehen, deren Schalterzustand auf eine Anzeige mit einer entsprechenden Anzahl LEDs übertragen wird. Der Anwender übernimmt die mittels der DIP-Schalter vorgegebenen und über die LEDs angezeigten Betriebsparametereinstellungen durch eine Bestätigung. Eine ähnliche Konfiguration beschreibt auch die WO 2016/008945 A1. Das erfordert aber Zusatzaufwand für die Anzeige, und es besteht dadurch auch keinerlei inhärenter Schutz gegen Fehlkonfigurationen, deren Gültigkeit allein der Anwender prüft.

Die US2018/0024522 A1 offenbart ein Verfahren und ein System für eine sicherheitsbezogene Eingabe einer Steuerung. Die Eingabe erfolgt mittels Touchscreen und wird durch Checksummen und dergleichen abgesichert. In einer Ausführungsform sind auf dem Touchscreen drei Reihen von grafischen Objekten angeordnet: Selektierbare Objekte in der ersten Reihe, ein jeweiliges Feedback für deren Auswahl in der zweiten Reihe, und ein Bestätigungsknopf in der dritten Reihe.

Eine weitere beispielsweise von Lichtgittern bekannte Maßnahme ist ein Paritätsschalter, der zusätzlich zu mehreren Schaltern zum Einstellen einer Konfiguration vorhanden ist und selbst keinen Einfluss auf die Konfiguration nimmt. Vielmehr muss der Paritätsschalter so gesetzt werden, dass insgesamt eine ungerade Anzahl Schalter auf aktiv gesetzt ist. Das schafft aber nur eine Einfehlersicherheit, denn bei gleichzeitiger Veränderung von zwei Schaltern bleibt die Parität erhalten.

Es ist daher Aufgabe der Erfindung, eine verlässliche und einfache Konfigurationsmöglichkeit für eine Sicherheitsschaltvorrichtung anzugeben.

Diese Aufgabe wird durch eine Sicherheitsschaltvorrichtung, insbesondere ein Sicherheitsrelais, mit einer Vielzahl von Schalterelementen zum sicheren Einstellen mindestens eines Betriebsparameters nach Anspruch 1 gelöst. Die Sicherheitsschaltvorrichtung hat die Funktion, in Abhängigkeit von einem Eingangssignal beispielsweise einer berührungslos wirkenden Schutzvorrichtung (BWS) einen an ihrem Ausgang oder Ausgangskontakt angeschlossenen Aktor sicher ein- oder auszuschalten, insbesondere eine überwachte Maschine in einen sicheren Zustand zu versetzen. Dabei bedeutet sicher oder Sicherheit, dass Fehlersicherheit auf einem Sicherheitsniveau entsprechend einer Sicherheitsnorm erreicht wird, beispielsweise durch mehrkanaligen Aufbau, zyklische Tests und dergleichen Maßnahmen wie einleitend schon erwähnt.

Um einen Betriebsparameter einzustellen, weist die Sicherheitsschaltvorrichtung eine Vielzahl von Schalterelementen auf, die ein Anwender bedienen und dazu wahlweise zwischen zwei Zuständen umlegen kann, die hier als aktiv und inaktiv bezeichnet werden. Vorsichtshalber sei erwähnt, dass diese Schalterelemente nichts mit der eigentlichen Schaltfunktion der Sicherheitsschaltvorrichtung zu tun haben, sondern eine Eingabemöglichkeit für eine Konfiguration darstellen.

Zu den derart eingestellten Schalterelementen ist intern in einer Steuer- und Auswertungseinheit ein zugehöriger Wert oder Zustand für einen Betriebsparameter hinterlegt. Es ist denkbar, dass die Schalterelemente für mehrere Betriebsparameter zuständig sind, vorzugsweise würden dafür aber mehrere unabhängige Schalterelementanordnungen eingesetzt. Die Steuer- und Auswertungseinheit wertet die Schalterstellungen aus und setzt dementsprechend den Betriebsparameter. Die Steuer- und Auswertungseinheit kann lediglich in Form einiger einfacher Logikschaltkreise, vorzugsweise als sicherer digitaler Baustein ausgebildet sein, beispielsweise als ein Mikrocontroller.

Die Erfindung geht von dem Grundgedanken aus, die Schalterelemente in mindestens drei Gruppen zu unterteilen, die hier mit den natürlich austauschbaren Namen erste Gruppe, zweite Gruppe und dritte Gruppe bezeichnet sind. Es wird für jede Gruppe eine Gültigkeitsbedingung geprüft. Ist diese Gültigkeitsbedingung in einer oder gar mehreren der drei Gruppen nicht erfüllt, so fasst die Steuer- und Auswertungseinheit die derzeit eingestellte Konfiguration als nicht gültig auf. Der Betriebsparameter wird dann nicht umgestellt. Es bleibt dann beispielsweise bei der letzten gültigen Konfiguration, der Betriebsparameter wird auf einen sicheren Default-Wert gesetzt, oder die Maschine wird in den sicheren Zustand versetzt, bis eine gültige Konfiguration eingestellt wird.

Die Erfindung hat den Vorteil, dass eine einfache, leicht zu fertigende und kostengünstige Eingabemöglichkeit geschaffen wird, die zugleich sicher bleibt. Es besteht eine hohe Fehlertoleranz, bei der sogar zwei zufällige Fehler ohne zusätzliches Risiko für eine gefährliche Neukonfiguration zugelassen werden. Zugleich bietet die Erfindung einen gewissen Grad an inhärenter Manipulationssicherheit ohne Zusatzmaßnahmen wie Abdeckungen. Im Servicefall ist ein rascher und intuitiver Austausch möglich, für den kein Wissen über die tatsächliche Konfiguration erforderlich ist.

Der Betriebsparameter weist bevorzugt eine Verzögerungszeit und/oder eine Veränderung der Auswertung mindestens eines Eingangs der Sicherheitsschaltvorrichtung auf. Die Verzögerungszeit ist ein Beispiel für einen Betriebsparameter, dem ein Wert zugeordnet werden soll. Die Schalterelemente bieten auf eine noch zu beschreibende Weise eine Vielzahl möglicher Werte an, zwischen denen ausgewählt werden kann. Betriebsparameter können aber auch im Sinne eines zu wählenden Betriebsmodus' verstanden werden. Dann sind beispielsweise mehrere sichere Auswertungsprogramme in der Steuer- und Auswertungseinheit abgelegt, von denen eines aktiviert wird, oder es werden Parameter solcher Auswertungsprogramme gesetzt. Ein Auswertungsprogramm bestimmt, ob die eingangsseitig anliegenden Signale zu einem Schalten am Ausgang führen oder nicht, beispielsweise ob ein Sicherheitsrelais seine Kontakte öffnet. Durch Konfiguration des Auswertungsprogramms lässt sich dieselbe Sicherheitsschaltvorrichtung für verschiedene Anwendungen nutzen, beispielsweise kann die Sicherheitsschaltvorrichtung dann wahlweise Signale eines eingangsseitig angeschlossenen OSSD (Output Signal Switching Device) eines Sensors, eines Not-Halt-Schalters oder Trittmatten auswerten.

Die Steuer- und Auswertungseinheit ist bevorzugt dafür ausgebildet, den Schalterelementen der ersten Gruppe mindestens einen Satz von Zuständen für den Betriebsparameter zuzuordnen. Obwohl eine komplexere Codierung mit mehr Zuständen denkbar wäre, umfasst vorzugsweise zur einfachen und fehlertoleranten Eingabe ein Satz von Zuständen gerade ebenso viele Elemente wie die erste Gruppe Schalterelemente. Die erste Gruppe bietet demnach eine Zuordnung zwischen Schalterstellungen ihrer Schalterelemente und zugehörigen Zuständen des Betriebsparameters, wobei ein Zustand auch ein Wert des Betriebsparameters sein kann. Vorzugsweise sind mehrere Sätze vorhanden, d.h. es gibt m Sätze mit je n Zuständen bei n Schalterelemente der ersten Gruppe, und dabei ist vorzugsweise n>1 und m>1.

Die Steuer- und Auswertungseinheit ist bevorzugt dafür ausgebildet, einem jeweiligen aktiven Schalterelement der ersten Gruppe einen Zustand innerhalb eines Satzes zuzuordnen. Es besteht also eine direkte Zuordnung zwischen Schalterelement und Zustand des Betriebsparameters, und eine Aktivierung des i-ten der n Schalter wählt dementsprechend den i-ten der n Zustände in einem Satz von Zuständen aus.

Die Steuer- und Auswertungseinheit ist bevorzugt dafür ausgebildet, mittels der Schalterelemente der zweiten Gruppe den Satz von Zuständen für die erste Gruppe auszuwählen. So kann der Bereich, in dem die erste Gruppe Zustände für den Betriebsparameter anbietet, durch Umschalten zwischen den Sätzen mittels der zweiten Gruppe vervielfacht werden. Wie in der ersten Gruppe erfolgt die Zuordnung vorzugsweise direkt, indem einem jeweiligen aktiven Schalterelement der zweiten Gruppe ein Satz zugeordnet ist, den die erste Gruppe dann verwendet. Ist also der j-te Schalter der zweiten Gruppe aktiv, so wird damit für die erste Gruppe der j-te der m Sätze von Zuständen für den Betriebsparameter ausgewählt.

Alternativ kann aber die zweite Gruppe auch selbst eine Satz Zustände des Betriebsparameters anbieten und nicht als Auswahl für die erste Gruppe fungieren. Beispielsweise wird dann über die erste Gruppe eine Verzögerungszeit mit weniger Variationsmöglichkeiten eingestellt, und die zweite Gruppe betrifft einen ganz anderen Betriebsparameter. Als weiteres Beispiel wird über die erste Gruppe ein manueller oder automatischer Reset eingestellt und über die zweite Gruppe, ob eingangsseitig ein OSSD, ein Notausschalter oder eine Trittmatte angeschlossen ist.

Die Steuer- und Auswertungseinheit ist bevorzugt dafür ausgebildet, eine Vielzahl von Werten für den Betriebsparameter in Sätze zu unterteilen, über die Schalterelemente der zweiten Gruppe den Satz und über die Schalterelemente der ersten Gruppe den Wert innerhalb des Satzes auszuwählen. Ist beispielsweise der Betriebsparameter eine Verzögerungszeit, so werden n*m Werte dafür angeboten und in m gleich großen Sätzen je n Werte unterteilt. Dann wird über die Schalterelemente der zweiten Gruppe der j-te der m Sätze und über die Schalterelemente der ersten Gruppe der i-te der n Werte innerhalb des Satzes gewählt. Entsprechend lässt sich auch eine Vielzahl anderer Zustände für andere Betriebsparameter behandeln.

Die Steuer- und Auswertungseinheit sieht bevorzugt die Schalterstellungen in der ersten Gruppe und/oder der zweiten Gruppen nur als gültig an, wenn genau ein Schalterelement der Gruppe aktiv ist. Das ist eine Gültigkeitsregel an die erste und/oder zweite Gruppe. Es ist also weder zulässig, dass gar kein Schalterelement in einer Gruppe aktiv ist, noch dass mehr als ein Schalterelement aktiv ist. Das eignet sich für eine direkte Zuordnung von Schalterelementen zu einem Satz beziehungsweise einem Zustand innerhalb eines Satzes.

Die dritte Gruppe weist bevorzugt genau ein Schalterelement auf. Im Gegensatz zu den beiden anderen Gruppen, die vorzugsweise mehrere Schalterelemente aufweisen, nämlich die beschriebenen n beziehungsweise m Schalterelemente, besteht die dritte Gruppe nur aus einem einzigen Schalterelement. Die dritte Gruppe dient damit vorzugsweise nicht dazu, bestimmte Werte oder Zustände für den Betriebsparameter zu wählen, sondern die Konfigurationseingabe abzusichern.

Die Steuer- und Auswertungseinheit ist bevorzugt dafür ausgebildet, die Schalterstellungen nur als gültig anzusehen, wenn das Schalterelement der dritten Gruppe gegenüber der letzten Einstellung für den Betriebsparameter invertiert wurde. Das ist eine Gültigkeitsregel für die dritte Gruppe. Die Steuer- und Auswertungseinheit merkt sich die Schalterstellung der dritten Gruppe bei der vorhergehenden Einstellung des Betriebsparameters und erwartet, dass sich das umkehrt, das Schalterelement der dritten Gruppe also betätigt wurde. Der Auslieferungszustand wird in diesem Sinne vorzugsweise als gültige Konfiguration aufgefasst. Alternativ ist im Auslieferungszustand eine Konfiguration ohne Funktion eingestellt.

Die Steuer- und Auswertungseinheit ist bevorzugt dafür ausgebildet, den Betriebsparameter bei einer nicht erfüllten Gültigkeitsbedingung, insbesondere wenn alle Schalterelemente inaktiv sind, im dem zuvor eingestellten Zustand zu belassen oder auf einen Vorgabezustand zu setzen. Wird versucht, eine Konfiguration unter Verletzung einer Gültigkeitsbedingung einzustellen, so wird diese möglicherweise sicherheitsgefährdende Konfiguration nicht übernommen. Das darf nicht zu einer undefinierten oder unsicheren Konfiguration führen. Daher lässt die Sicherheitsschaltvorrichtung den Betriebsparameter unberührt, der in dieser Form das Ergebnis einer früheren, fehlerfreien Konfiguration ist. Alternativ fällt das System auf einen sicheren Default- oder Resetzustand des Betriebsparameters zurück. Nicht gültig ist nach den diversen vorgestellten Ausführungsformen insbesondere, wenn in den ersten beiden Gruppen kein Schalterelement aktiv ist, wenn dort mehr als ein Schalterelement aktiv ist oder wenn das Schalterelement der dritten Gruppe nicht invertiert oder umgeschaltet wurde. Ein Spezialfall ist, wenn sämtliche Schalterelemente der ersten beiden Gruppen oder sogar aller Gruppen auf inaktiv stehen. Ein Beispiel für einen sicheren Defaultzustand ist eine Verzögerung Null.

Die Schalterelemente sind bevorzugt als DiP-Schalter (Dual in-line Package) ausgebildet. Sie können dann mit nur geringem Herstellungsaufwand mit bestückt werden.

Alle Schalterelemente sind vorzugsweise in einer Reihe angeordnet. Das erfordert keinen besonderen Aufwand bei der Herstellung und beim Design. Die Schalterelemente sind vorzugswese gruppenweise angeordnet.

Zwischen den Schalterelementen der Gruppen ist bevorzugt ein Abstand vorgesehen, insbesondere in Form eines funktionslosen Schalterelements. Damit soll verhindert werden, dass mit derselben Bewegung des Anwenders zwei Schalterelemente aus verschiedenen Gruppen bedient werden. Geschieht das mit zwei Schalterelementen innerhalb einer Gruppe, so würde das anhand der Gültigkeitsregeln bemerkt. Das Betätigen zweier Schalterelemente aus unterschiedlichen Gruppen könnte aber prinzipiell eine sinnvolle Konfiguration sein, und damit wäre die Zweifehlersicherheit nicht mehr gewahrt. Durch den Abstand wird sichergestellt, dass eine derartige Betätigung nur mit Absicht erfolgen kann. Allerdings sollte in diesem Zusammenhang erwähnt werden, dass Zweifehlersicherheit sich nach den einschlägigen Normen auf zufällige Hardwarefehler und nicht Eingabefehler bezieht. Eine fehlerhafte Anwendereingabe würde im Rahmen der von den Normen ebenfalls vorgesehenen Tests bei der (Wieder-) Inbetriebnahme noch bemerkt. Trotzdem ist es vorteilhaft, hierbei die möglichen Eingabefehler möglichst gering zu halten.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Überblicksdarstellung einer Sicherheitsschaltvorrichtung mit eingangsseitiger berührungslos wirkender Schutzvorrichtung und ausgangsseitiger zu überwachender Maschine; und
- Fig. 2: eine vergrößerte Darstellung eine Anordnung von Schalterelementen in drei Gruppen zur Einstellung eines Betriebsparameters der Sicherheitsschaltvorrichtung.

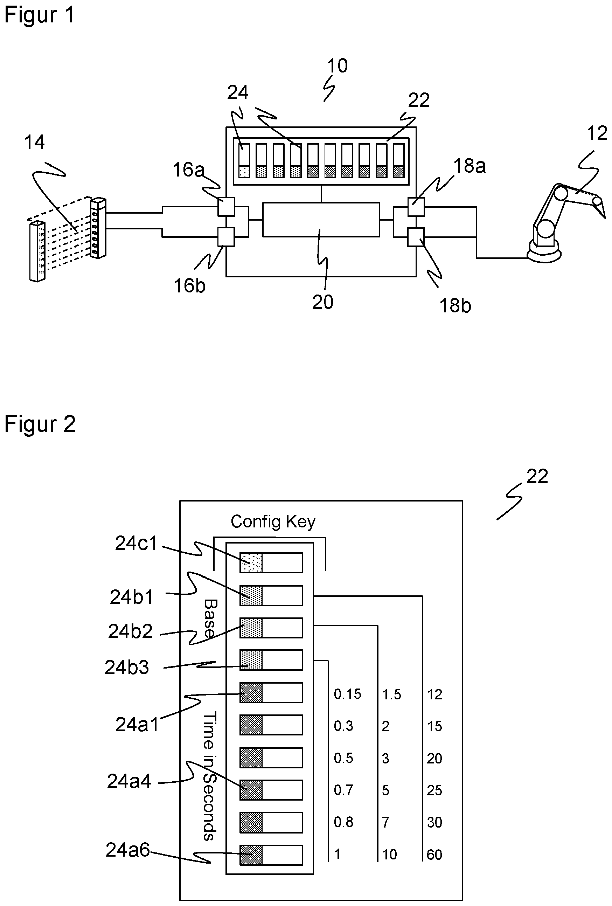

Figur 1 zeigt eine Überblicksdarstellung einer Sicherheitsschaltvorrichtung 10, die beispielsweise als Sicherheitsrelais ausgebildet ist, in einer Anwendung zur Absicherung einer Maschine 12 mithilfe einer berührungslos wirkenden Schutzeinrichtung 14. Diese Anwendung ist nur als Beispiel zu verstehen, insbesondere sind mehrere und andere eingangsseitige Signalgeber anstelle eines Lichtgitters und andere Schaltaufgaben als das Stillsetzen eines Roboterarms denkbar.

Die Sicherheitsschaltvorrichtung 10 weist einen zweikanalig ausgebildeten Eingang 16a-b, an dem die berührungslos wirkende Schutzeinrichtung angeschlossen ist, sowie einen ebenfalls zweikanalig ausgebildeten Ausgang 18a-b auf, der geschaltet werden soll und an dem die Maschine 12 angeschlossen ist. Eine Steuer- und Auswertungseinheit 20 wertet die eingangsseitigen Signale aus und entscheidet anhand eines Auswertungsprogramms, ob und wann der Ausgangs 18a-b geschaltet wird. Ein typischer Schaltvorgang besteht darin, die Maschine durch Öffnen eines als Relaiskontakt ausgebildeten Ausgangs 18a-b stromlos zu setzen.

Die Sicherheitsschaltvorrichtung 10 ist ein fehlersicher ausgebildetes Gerät im Sinne von Sicherheitsnormen, wie dies einleitend kurz diskutiert wurde. Im dargestellten Beispiel sind dazu zweikanalige Eingänge 16a-b und Ausgänge 18a-b vorgesehen. Die Steuer- und Auswertungseinheit 20 kann entgegen der Darstellung ebenfalls zweikanalig ausgebildet sein, etwa mit zwei einander gegenseitig überwachenden Mikrocontrollern oder CPUs. Andere Maßnahmen wie zyklische Tests sind ebenfalls möglich.

Die Schaltvorrichtung 10 weist eine Schalteranordnung 22 mit einer Vielzahl von Schalterelementen 24 auf, insbesondere DiP-Schalter. Damit werden Betriebsparameter der Sicherheitsschaltvorrichtung 10 gesetzt oder verändert, etwa eine Verzögerungszeit eingestellt, mit der die Ausgänge 18a-b schalten, oder das Auswertungsprogramm ausgewählt beziehungsweise parametriert, mit dem die Steuer- und Auswertungseinheit 20 über das Schalten entscheidet.

Figur 2 zeigt eine Ausführungsform der Schalteranordnung 22 zum Konfigurieren der Sicherheitsschaltvorrichtung 10 in vergrößerter Darstellung. Das konkrete Design mit den Beschriftungen sowie Anordnung und Anzahl der Schalterelemente 24 ist beispielhaft zu verstehen.

Die Schalterelemente 24 sind in eine erste Gruppe ("Time") mit sechs Schalterelementen 24a1..24a6, eine zweite Gruppe ("Base") mit drei Schalterelementen 24b1...24b3 und eine dritte Gruppe ("Config Key") mit einem einzigen Schalterelement 24c1 unterteilt. Selbstverständlich sind andere Anzahlen ebenso denkbar, lediglich die dritte Gruppe weist tatsächlich vorzugsweise nur ein einziges Schalterelement 24c1 auf. Die Schalterelemente der jeweiligen Gruppen sind zueinander benachbart innerhalb einer einzigen Reihe angeordnet. Das ist herstellungstechnisch besonders günstig, alternativ aber auch veränderbar. Für den Anwender sind die Gruppen kenntlich gemacht, sei es durch die Anordnung oder wie in der Darstellung durch unterschiedliche Markierung der Schalterelemente 24.

Die Steuer- und Auswertungseinheit 20 überträgt die Schalterstellungen in eine Einstellung für den Betriebsparameter. Um Fehlkonfigurationen zu verhindern, sind an die Schalterelemente 24 jeder Gruppe Bedingungen geknüpft. Die Konfiguration wird am Beispiel der Einstellung einer Verzögerungszeit eines Sicherheitsrelais erläutert.

Dabei sind die rechts in Figur 2 dargestellten Werte möglich. Sie sind in Sätze mit jeweils n=6 Werten unterteilt. Die Schalterelemente 24a1...24a6 der ersten Gruppe entscheiden, welcher dieser Werte innerhalb eines Satzes ausgewählt ist. Es gibt insgesamt m=3 solcher Sätze, und die Schalterelemente 24b1..24b3 der zweiten Gruppe entscheiden, welcher Satz verwendet wird. Das Schalterelement 24c1 der dritten Gruppe schließlich zeigt durch dessen Betätigen und damit Invertieren gegenüber seiner vorherigen Schalterstellung an, dass eine neue Konfiguration gewünscht und beabsichtigt ist. Es wurde bereits darauf hingewiesen, dass die Wahl n=6 und m=3 nur ein Beispiel ist, es kann mehr oder weniger Schalterelemente 24 je Gruppe geben. Allerdings sollte es mindestens drei Gruppen von Schalterelementen 24 geben, wobei eine der Gruppen nur ein Schalterelement 24c1 umfasst und alle anderen mindestens zwei Schalterelemente 24 besitzen.

Eine neue Konfiguration muss für jede der drei Gruppen eine Gültigkeitsregel erfüllen. Im gezeigten Bespiel sind vorteilhafte Regeln wie folgt:
- Aus jeder Gruppe darf maximal ein Schalterelement 24 aktiv sein.
- Aus jeder Gruppe außer der dritten Gruppe mit dem Schalterelement 24c1muss mindestens ein Schalterelement 24 aktiv sein.
- Wann immer eine neue Kombination konfiguriert werden soll, muss das Schalterelement 24c1 der dritten Gruppe im Vergleich zur letzten gültigen Konfiguration invertiert werden.

Ein Beispiel für eine gültige Konfiguration ist, dass in der ersten Gruppe allein das Schalterelement 24a4 und in der zweiten Gruppe allein das Schalterelement 24b2 aktiv ist, während in der dritten Gruppe das Schalterelement 24c1 betätigt und damit invertiert wurde. Damit wird eine neue Verzögerungszeit als der hier betrachtete beispielhafte Betriebsparameter auf den vierten Wert im zweiten Satz und damit 5s festgelegt. Ist dagegen eine der genannten Gültigkeitsregeln verletzt, so bleibt die Verzögerungszeit entweder unverändert und damit auf dem vorhergehenden, gültigen Wert, sie wird auf einen sicheren Defaultwert beziehungsweise Resetwert gesetzt, oder die Sicherheitsschaltvorrichtung 10 zeigt einen Fehler an und blockiert den Betrieb der Maschine 12. Sicher wäre etwa für das Beispiel Verzögerungszeit ein Wert von Null. Speziell liegt eine solche ungültige Konfiguration vor, wenn alle Schalterelemente 24 oder zumindest alle in den ersten beiden Gruppen inaktiv sind.

Durch diese Art der Konfiguration sind geeignete Schutzmaßnahmen für den Fehlerfall getroffen. Das aktive Betätigen von drei nicht nebeneinanderliegenden Schalterelementen 24 aus drei verschiedenen Gruppen ist nur bei einer beabsichtigten Konfiguration anzunehmen. Ein zusätzlicher Bestätigungsschalter wird nicht benötigt. Durch zufällige Fehler in den Schalterstellungen könnte eine neue gültige Konfiguration nur entstehen, wenn sich der Zustand von mindestens drei Schalterelementen 24 ändert, und damit ist die Konfiguration zweifehlersicher. Allein die Konfiguration des Defaultwerts beziehungsweise Resetwerts ist mit weniger Fehlern möglich, etwa indem alle Schalterelemente 24 inaktiv gestellt werden. Das ist aber kein Sicherheitsproblem, solange dafür ein sicherer Wert wie eine Verzögerungszeit Null vorgegeben ist.

Die Konfiguration bietet auch einen gewissen inhärenten Manipulationsschutz. Es genügt nicht, einfach eine neue Zeit mit den Schalterelementen 24a1..24a6 der ersten Gruppe zu wählen, nicht einmal bei korrekter Beachtung der Wirkung der Schalterelemente 24b1..24b3 der zweiten Gruppe, denn dann fehlt immer noch die Invertierung des Schalterelements 24c1 der dritten Gruppe. Die Manipulationssicherheit kann noch erhöht werden, indem auf die Beschriftungen insbesondere des Schalterelements 24c1 "Config Key" verzichtet wird und womöglich sogar die Zugehörigkeit der Schalterelemente 24 zu den Gruppen nicht erkennbar ist. Dann ist eine Neukonfiguration nur mit Gerätewissen möglich, während die Übertragung der vorhandenen Einstellung weiterhin keinerlei Kenntnisse erfordert.

Die Schalteranordnung 22 ist auch kostengünstig zu fertigen, anders als herkömmliche Drehschalter. Bei Realisierung mit einem DiP-Switch wird nur eine einzige Komponente benötigt, die automatische in der Elektronikkartenfertigung bestückt wird. Mit dieser einen Komponente werden auf übersichtliche Weise viele Konfigurationsmöglichkeiten angeboten, im gezeigten Beispiel der Figur 2 sind es n*m=6*3=18.

Um ein defektes Gerät auszutauschen, kann der Servicetechniker ohne Wissen über die Konfigurationsroutine die Stellung der Schalterelemente 24 auf das neue Gerät übertragen. Lediglich das Schalterelement 24c1 der dritten Gruppe muss gegebenenfalls noch zusätzlich betätigt werden, je nach Auslieferungszustand des neuen Geräts und Stellung des Schalterelements 24c1 beim Austauschgerät, das womöglich mehrere Änderungen der Konfiguration erfahren hat. Die bestehende Konfiguration kann aber auch hinsichtlich des Schalterelements 24c1 so gewählt sein, dass das Umschalten bei einem Austauschgerät nicht erforderlich ist. Nur falls im Zuge des Austauschs auch eine Neukonfiguration vorgenommen werden soll, muss sich der Servicetechniker über die Bedeutung der Schalterelemente 24 im Klaren sein, aber das hat dann mit dem eigentlichen Austausch nichts mehr zu tun, und sämtliche genannten Vorteile der erfindungsgemäßen Einstellung von Betriebsparameter unterstützen den Servicetechniker bei dieser Aufgabe.

Die Erfindung wurde am Beispiel von Schalterelementen 24 in drei Gruppen vorgestellt. Es ist möglich, weitere Gruppen vorzusehen, insbesondere für eine noch höhere Fehlersicherheit und größere Robustheit über die bereits erreichte Zweifehlersicherheit hinaus. Anstelle der als Beispiel herangezogenen Verzögerung können andere Betriebsparameter eingestellt werden. Die Schalterelemente 24 in den ersten beiden Gruppen können eine andere Bedeutung haben. Beispielsweise ist für die erste Gruppe von Schalterelementen 24a1..24a6 nur ein Satz von Werten hinterlegt, und über die zweite Gruppe wird nur indirekt zwischen mehreren Sätzen umgeschaltet, indem ein bestimmter Multiplikator verwendet wird.

## Patentansprüche

1. Sicherheitsschaltvorrichtung (10), insbesondere Sicherheitsrelais, mit einer Vielzahl von Schalterelementen (24) zum sicheren Einstellen mindestens eines Betriebsparameters der Sicherheitsschaltvorrichtung (10), und mit einer Steuer- und Auswertungseinheit (20), die dafür ausgebildet ist, den Betriebsparameter anhand der Schalterstellungen der Schalterelemente (24) einzustellen, **dadurch gekennzeichnet,**
**dass** die Schalterelemente (24) mindestens eine erste Gruppe (24a1..24a6), zweite Gruppe (24b1..24b3) und dritte Gruppe (24c1) bilden und dass die Steuer- und Auswertungseinheit (20) weiterhin dafür ausgebildet ist, den Betriebsparameter nur dann entsprechend der Schalterstellungen einzustellen, wenn die Schalterelemente (24) in jeder der drei Gruppen eine Gültigkeitsbedingung erfüllen.

2. Sicherheitsschaltvorrichtung (10) nach Anspruch 1,
wobei der Betriebsparameter eine Verzögerungszeit und/oder eine Veränderung der Auswertung mindestens eines Eingangs (16a-b) der Sicherheitsschaltvorrichtung (10) aufweist.

3. Sicherheitsschaltvorrichtung (10) nach Anspruch 1 oder 2,
wobei die Steuer- und Auswertungseinheit (20) dafür ausgebildet ist, den Schalterelementen der ersten Gruppe (24a1..24a6) mindestens einen Satz von Zuständen für den Betriebsparameter zuzuordnen, wobei jeder Satz von Zuständen insbesondere ebenso viele Elemente aufweist wie die erste Gruppe (24a1..24a6) Schalterelemente (24).

4. Sicherheitsschaltvorrichtung (10) nach Anspruch 3,
wobei die Steuer- und Auswertungseinheit (20) dafür ausgebildet ist, einem jeweiligen aktiven Schalterelement (24) der ersten Gruppe (24a1..24a6) einen Zustand innerhalb eines Satzes zuzuordnen.

5. Sicherheitsschaltvorrichtung (10) nach Anspruch 3 oder 4,
wobei die Steuer- und Auswertungseinheit (20) dafür ausgebildet ist, mittels der Schalterelemente (24) der zweiten Gruppe (24b1..24b3) den Satz von Zuständen für die erste Gruppe (24a1..24a6) auszuwählen, insbesondere indem einem jeweiligen aktiven Schalterelement (24) der zweiten Gruppe (24b1..24b3) ein Satz zugeordnet ist.

6. Sicherheitsschaltvorrichtung (10) nach einem der vorhergehenden Ansprüche, wobei die Steuer- und Auswertungseinheit (20) dafür ausgebildet ist, eine Vielzahl von Werten für den Betriebsparameter in Sätze zu unterteilen, über die Schalterelemente (24) der zweiten Gruppe (24b1..24b3) den Satz und über die Schalterelemente (24) der ersten Gruppe (24a1..24a6) den Wert innerhalb des Satzes auszuwählen.

7. Sicherheitsschaltvorrichtung (10) nach einem der vorhergehenden Ansprüche, wobei die Steuer- und Auswertungseinheit (20) dafür ausgebildet ist, den Betriebsparameter nur dann entsprechend der Schalterstellungen einzustellen, wenn in der ersten Gruppe (24a1..24a6) und/oder der zweiten Gruppen (24b1..24b3) Schalterstellungen die Gültigkeitsbedingung erfüllen, dass genau ein Schalterelement (24) der Gruppe aktiv ist.

8. Sicherheitsschaltvorrichtung (10) nach einem der vorhergehenden Ansprüche, wobei die dritte Gruppe (24c1) genau ein Schalterelement (24) aufweist.

9. Sicherheitsschaltvorrichtung (10) nach Anspruch 8,
wobei die Steuer- und Auswertungseinheit (20) dafür ausgebildet ist, die Schalterstellungen nur als gültig anzusehen, wenn das Schalterelement (24) der dritten Gruppe (24c1) gegenüber der letzten Einstellung für den Betriebsparameter invertiert wurde.

10. Sicherheitsschaltvorrichtung (10) nach einem der vorhergehenden Ansprüche, wobei die Steuer- und Auswertungseinheit (20) dafür ausgebildet ist, den Betriebsparameter bei einer nicht erfüllten Gültigkeitsbedingung, insbesondere wenn alle Schalterelemente (24) inaktiv sind, im dem zuvor eingestellten Zustand zu belassen oder auf einen Vorgabezustand zu setzen.

11. Sicherheitsschaltvorrichtung (10) nach einem der vorhergehenden Ansprüche, wobei die Schalterelemente (24) als DiP-Schalter ausgebildet sind.

12. Sicherheitsschaltvorrichtung (10) nach einem der vorhergehenden Ansprüche, wobei alle Schalterelemente (24) in einer Reihe angeordnet sind.

13. Sicherheitsschaltvorrichtung (10) nach einem der vorhergehenden Ansprüche, wobei zwischen den Schalterelementen (24) der Gruppen ein Abstand vorgesehen ist, insbesondere in Form eines funktionslosen Schalterelements.

## Claims

1. A safety switching device (10), in particular safety relay, having a plurality of switch elements (24) for safely setting at least one operating parameter of the safety switching device (10), and having a control and evaluation unit (20) configured to set the operating parameter on the basis of the switch positions of the switch elements (24),
**characterized in that** the switch elements (24) form at least a first group (24a1..24a6), second group (24b1..24b3) and third group (24c1), and **in that** the control and evaluation unit (20) is further configured to set the operating parameter according to the switch positions only when the switch elements (24) in each of the three groups satisfy a validity condition.

2. The safety switching device (10) according to claim 1,
wherein the operating parameter comprises a delay time and/or a change in the evaluation of at least one input (16a-b) of the safety switching device (10).

3. The safety switching device (10) according to claim 1 or 2,
wherein the control and evaluation unit (20) is configured to assign at least one set of states for the operating parameter to the switch elements of the first group (24a1..24a6), each set of states in particular comprising as many elements as the first group (24a1..24a6) of switch elements (24).

4. The safety switching device (10) according to claim 3,
wherein the control and evaluation unit (20) is configured to assign a state within a set to a respective active switch element (24) of the first group (24a1..24a6).

5. The safety switching device (10) according to claim 3 or 4,
wherein the control and evaluation unit (20) is configured to select the set of states for the first group (24a1..24a6) by means of the switch elements (24) of the second group (24b1..24b3), in particular by assigning a set to a respective active switch element (24) of the second group (24b1..24b3).

6. The safety switching device (10) according to any of the preceding claims, wherein the control and evaluation unit (20) is configured to divide a plurality of values for the operating parameter into sets, to select the set via the switch elements (24) of the second group (24b1..24b3) and to select the value within the set via the switch elements (24) of the first group (24a1..24a6).

7. The safety switching device (10) according to any of the preceding claims, wherein the control and evaluation unit (20) is configured to set the operating parameter according to the switch positions only if switch positions in the first group (24a1..24a6) and/or the second groups (24b1..24b3) fulfill the validity condition that exactly one switch element (24) of the group is active.

8. The safety switching device (10) according to any of the preceding claims, wherein the third group (24c1) comprises exactly one switch element (24).

9. The safety switching device (10) according to claim 8,
wherein the control and evaluation unit (20) is configured to consider the switch settings as valid only if the switch element (24) of the third group (24c1) has been inverted with respect to the last setting for the operating parameter.

10. The safety switching device (10) according to any of the preceding claims, wherein the control and evaluation unit (20) is configured to leave the operating parameter in the previously set state or to set it to a default state when a validity condition is not fulfilled, in particular when all switch elements (24) are inactive.

11. The safety switching device (10) according to any of the preceding claims, wherein the switch elements (24) are configured as DiP switches.

12. The safety switching device (10) according to any of the preceding claims, wherein all switch elements (24) are arranged in a row.

13. The safety switching device (10) according to any of the preceding claims, wherein a spacing is provided between the switch elements (24) of the groups, in particular in the form of a functionless switch element.

## Revendications

1. Dispositif de commutation de sécurité (10), en particulier relais de sécurité, avec une pluralité d'éléments de commutation (24) pour le réglage sûr d'au moins un paramètre de fonctionnement de l'appareil de commutation de sécurité (10), et avec une unité de commande et d'évaluation (20) configurée pour régler le paramètre de fonctionnement sur la base des positions de commutation des éléments de commutation (24),
**caractérisé en ce que** les éléments de commutation (24) forment au moins un premier groupe (24a1..24a6), un deuxième groupe (24b1..24b3) et un troisième groupe (24c1), et **en ce que** l'unité de commande et d'évaluation (20) est en outre configurée pour régler le paramètre de fonctionnement en fonction des positions de commutation uniquement lorsque les éléments de commutation (24) de chacun des trois groupes satisfont à une condition de validité.

2. Dispositif de commutation de sécurité (10) selon la revendication 1,
dans lequel le paramètre de fonctionnement comprend un temps de retard et/ou une modification de l'évaluation d'au moins une entrée (16a -b) du dispositif de commutation de sécurité (10).

3. Dispositif de commutation de sécurité (10) selon la revendication 1 ou 2, dans lequel l'unité de commande et d'évaluation (20) est configurée pour affecter au moins un jeu d'états pour le paramètre de fonctionnement aux éléments de commutation du premier groupe (24a1..24a6), chaque jeu d'états comprenant en particulier autant d'éléments que le premier groupe (24a1..24a6) d'éléments de commutation (24).

4. Dispositif de commutation de sécurité (10) selon la revendication 3,
dans lequel l'unité de commande et d'évaluation (20) est configurée pour attribuer un état au sein d'un ensemble à un élément de commutation actif respectif (24) du premier groupe (24a1... 24a6).

5. Dispositif de commutation de sécurité (10) selon la revendication 3 ou 4, dans lequel l'unité de commande et d'évaluation (20) est configurée pour sélectionner le jeu d'états pour le premier groupe (24a1..24a6) au moyen des éléments de commutation (24) du deuxième groupe (24b1..24b3), en particulier en affectant un jeu à un élément de commutation actif respectif (24) du deuxième groupe (24b1..24b3).

6. Dispositif de commutation de sécurité (10) selon l'une des revendications précédentes,
dans lequel l'unité de commande et d'évaluation (20) est configurée pour diviser une pluralité de valeurs pour le paramètre de fonctionnement en ensembles, pour sélectionner l'ensemble via les éléments de commutation (24) du deuxième groupe (24b1..24b3) et pour sélectionner la valeur à l'intérieur de l'ensemble via les éléments de commutation (24) du premier groupe (24a1..24a6).

7. Dispositif de commutation de sécurité (10) selon l'une des revendications précédentes,
dans lequel l'unité de commande et d'évaluation (20) est configurée pour régler le paramètre de fonctionnement en fonction des positions de commutation uniquement si les positions de commutation du premier groupe (24a1..24a6) et/ou du deuxième groupe (24b1..24b3) remplissent la condition de validité selon laquelle exactement un élément de commutation (24) du groupe est actif.

8. Dispositif de commutation de sécurité (10) selon l'une des revendications précédentes,
dans lequel le troisième groupe (24c1) comprend exactement un élément de commutation (24).

9. Dispositif de commutation de sécurité (10) selon la revendication 8,
dans lequel l'unité de commande et d'évaluation (20) est configurée pour ne considérer les réglages de commutation comme valides que si l'élément de commutation (24) du troisième groupe (24c1) a été inversé par rapport au dernier réglage du paramètre de fonctionnement.

10. Dispositif de commutation de sécurité (10) selon l'une des revendications précédentes,
dans lequel l'unité de commande et d'évaluation (20) est configurée pour laisser le paramètre de fonctionnement dans l'état précédemment réglé ou pour le régler sur un état par défaut lorsqu'une condition de validité n'est pas remplie, notamment lorsque tous les éléments de commutation (24) sont inactifs.

11. Dispositif de commutation de sécurité (10) selon l'une des revendications précédentes,
dans lequel les éléments de commutation (24) sont configurés comme des commutateurs DiP.

12. Dispositif de commutation de sécurité (10) selon l'une des revendications précédentes,
dans lequel tous les éléments de commutation (24) sont disposés en ligne.

13. Dispositif de commutation de sécurité (10) selon l'une des revendications précédentes,
dans lequel un espacement est prévu entre les éléments de commutation (24) des groupes, en particulier sous la forme d'un élément de commutation non fonctionnel.
